# EUROPÄISCHE PATENTSCHRIFT

(11) **EP 1 280 600 B1**
(45) Veröffentlichungstag und Bekanntmachung des Hinweises auf die Patenterteilung: **11.08.2004**
(21) Anmeldenummer: 00983307.0
(22) Anmeldetag: 13.12.2000
(51) Int. Cl.: B01J 31/14, B01J 31/22, B01J 31/02, C08F 10/00, C08F 4/64, C07F 5/02, C07F 5/06, C07F 17/00

(54) **GETRÄGERTES KATALYSATORSYSTEM ENTHALTEND EIN METALLOCEN, EINE LEWIS-BASE UND EINE ELEMENTORGANISCHE VERBINDUNG DER III. HAUPTGRUPPE, SOWIE DESSEN VERWENDUNG**
SUPPORTED CATALYST SYSTEM COMPRISING A METALLOCENE, A LEWIS-BASE AND AN ORGANODEMENTAL COMPOUND OF MAIN GROUP III, AND ITS USE
SYSTEME CATALYTIQUE SUPPORTE COMPRENANT UN METALLOCENE, UNE BASE DE LEWIS ET UN COMPOSE ORGANOELEMENTAL DU GROUPE PRINCIPAL III, ET SON UTILISATION

(30) Priorität: 23.12.1999 DE 19962814
(43) Veröffentlichungstag der Anmeldung: 05.02.2003
(73) Patentinhaber: Basell Polyolefine GmbH, 50389 Wesseling (DE)
(72) Erfinder: KRATZER, Roland, 65719 Hofheim (DE); FRITZE, Cornelia, 60529 Frankfurt (DE); SCHOTTEK, Jörg, 60486 Frankfurt (DE)
(86) Internationale Anmeldenummer: PCT/EP2000/012641
(87) Internationale Veröffentlichungsnummer: WO 2001/047635

(56) Entgegenhaltungen:
- EP-A- 0 601 830
- EP-A- 0 764 649
- EP-A- 1 074 557
- WO-A-00/11006
- WO-A-91/09882
- WO-A-99/42467
- WO-A-99/67302
- DE-A- 2 108 372
- DE-A- 19 632 557
- DE-A- 19 647 070
- DE-A- 19 804 970
- DE-A- 19 823 168
- DE-A- 19 823 171
- DE-A- 19 823 172
- US-A- 5 596 115

## Beschreibung

Die vorliegende Erfindung betrifft ein Katalysatorsystem enthaltend mindestens ein Metallocen, mindestens ein Cokatalysator, mindestens ein Trägermaterial und gegebenenfalls weitere Organometallverbindungen.

Das Katalysatorsystem kann vorteilhaft zur Polymerisation von Olefinen eingesetzt werden, wobei auf die Verwendung von Aluminoxanen wie Methylaluminoxan (MAO), das üblicherweise in hohem Überschuß eingesetzt werden muß, als Cokatalysator verzichtet werden kann und dennoch eine hohe Katalysatoraktivität und gute Polymermorphologie erzielt wird. Darüber hinaus wird die Verwendung von Einsatzstoffen vermieden, die potentiell toxisch sein könnten.

Eine industrielle Nutzung von metallocen-Katalysatoren fordert eine Beterogenisierung des Katalysatorsystems, um eine entsprechende Morphologie des resultierenden Polymers zu gewährleisten. Dabei erweist es sich als vorteilhaft Komponenten des Katalysatorsystems kovalent an den Träger zu binden, um so das "Ausbluten" der wirkkomponente vom Träger und damit die Verschlechterung der Polymermorphologie zu vermeiden.

Eine Reihe von Patenten (siehe z.B. WO-96/23005, DE-A 19804970, DE-A 19823172, DE-A 19744102, DE-A 19757540) beschreibt Katalysatorsysteme in welchen der. Cokatalysator, eine Elementorganische Verbindung, unter Ausbildung eines Ammoniumsalzes kovalent an das Trägermaterial gebunden wird. Nachteil dieser Systeme: sie arbeiten bevorzugt mit tertiären Anilinen als organischen Basen, Verbindungen die aufgrund ihres möglicherweise toxischen bzw. gentoxischen Potentials besondere Schutzmaßnahmen in der Katalysatorherstellung erfordern.

Die Aufgabe der vorliegenden Erfindung bestand darin, ein Katalysatorsystem basierend auf der kovalenten Trägerung eines Cokatalysators zur Verfügung zu stellen, welches die Nachteile des Stands der Technik vermeidet. Basierend auf einer speziellen Klasse von toxikologisch unbedenklichen Lewis-Basen ließ sich ein Katalysatorsystem entwickeln, das in unerwarteter Weise hohe Polymerisationsaktivitäten und eine gute Polymermorphologie ermöglicht.

Das erfindungsgemäße Katalysatorsystem enthält
a) mindestens eine organometallverbindung,
b) mindestens eine Lewie-Base,
c) mindestens einen Träger und
d) mindestens eine Elementorganische Verbindung, die das Umsetzungsprodukt der Umsetzung mindestens einer Verbindung der Formel (VI) mit mindestens einer Verbindung der Formel (IX),

   R_{f}⁴B(̵XR⁷) _{g} (VI)

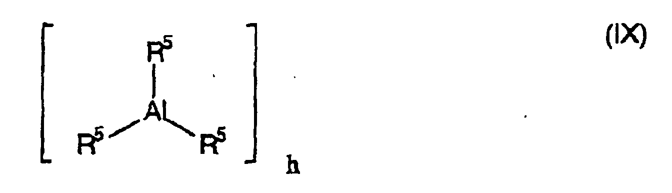

   worin
   - R⁷: ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann,
   - R⁴ und R⁵: gleich oder verschieden sind und ein Wasserstoffatom, ein Halogenatom oder eine C₁-C₄₀-kohlenstoffbaltige Gruppe sind oder R⁴ -OSiR₃-Gruppe ist, worin R gleich oder verschieden sind und die gleiche Bedeutung wie R⁵ haben,
   - X: ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
   - f: eine ganze Zahl von 0 bis 3 ist
   - g: eine ganze Zahl von 0 bis 3 ist, wobei f + g ungleich 0 sind,
   - h: eine ganze Zahl von 1 bis 10 ist,
   ist,
   wobei die Elamentorganische Verbindung kovalent an den Träger gebunden ist,
   dadurch gekennzeichnet, daß die Lewis-Base die Formel I,

   M¹R¹R²R³ (I)

   worin
   M¹ für ein Element der V. Bauptgruppe des Periodensystems der Elemente steht,
   R¹, R² und R³ gleich oder verschieden sind und für ein Wasserstoffatom, eine C₁-C₂₀-Alkyl-, eine C₁-C₂₀-Halogenalkyl- oder C₇-C₄₀-Arylalkyl-Gruppe stehen, wobei gegebenenfalls zwei Reste oder alle drei Reste R¹, R² und R³ über C₂-C₂₀-Kohlenstoffeinheiten miteinander verbunden sein können, wobei mindestens ein Rest R¹, R² oder R³ für eine C₇-C₄₀-Arylalkyl-Gruppe steht,
   aufweist,
   sowie gegebenenfalls
e) mindestens eine organometallverbindung der Formel III

   [M³R⁶ _{d}]ₑ (III)

   worin
   M³ ein Element der I., II. und III. Hauptgruppe des Periodensystems der Elemente ist,
   R⁶ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₄₀-Aryl-, C₇-C₄₀-Aryl-alkyl oder C₇-C₄₀-Alkyl-aryl-Gruppe bedeutet,
   d eine ganze Zahl von 1 bis 3 und
   e ist eine ganze Zahl von 1 bis 4 ist.

Bevorzugt sind Lewis-Basen der Formel (I), worin R¹, R² und R³ gleich oder verschieden sind und für eine benzylische Gruppe stehen.

Beispiele für Lewis-Basen der Formel (I) sind
N,N-Diethylbenzylamin, N,N-Dimethylbenzylamin, N-Benzyldiniethylamin, N-Benzyldiethylamin, N-Benzylbutylamin, N-Benzyl tert.-butylamin, N-Benzylisopropylamin, N-Benzylmethylamin, N-Benzylethylamin, N-Benzyl-1-phenylethylamin, N-Benzyl-2-phenylethylamin, N,N-Dimethyl-benzylamin,N,N-Diethyl-benzylamin, N-Methyl-N-Ethyl-benzylamin, N-Methyl-dibenzylamin, N-Ethyl-di(benzyl)-amin.

Besonders bevorzugte Basen sind zum Beispiel Benzylamin, N-Benzyldimethylamin, N-Benzyldiethylamin, N-Benzylbutylamin, N-Benzyl tert.-butylamin, N-Benzylisopropylamin, N-Benzylmethylamin, N-Benzylethylamin, N-Benzyl-1-phenylethylamin oder N-Benzyl-2-phenylethylamin.

Der Träger ist ein poröser anorganischer oder organischer Feststoff. Bevorzugt enthält der Träger mindestens ein anorganisches Oxid, wie Siliziumoxid, Aluminiumoxid, Alumosilicate, Zeolithe, MgO, ZrO₂, TiO₂, B₂O₃, CaO, ZnO, ThO₂ oder Mischoxide, insbesondere Siliziumoxid und/oder Aluminiumoxid und/oder Mg/Al-Mischoxid. Der Träger kann auch mindestens ein Polymer enthalten, z.B. ein Homo- oder Copolymer, ein vernetztes Polymer oder Polymerblends. Beispiele für Polymere sind Polymethacrylat, Polycarbonat oder Polyvinylalkohol.

Der Träger weist eine spezifische Oberfläche im Bereich von 10 bis 1000 m²/g, bevorzugt von 150 bis 500 m²/g auf. Die mittlere Partikelgröße des Trägers beträgt 1 bis 500 µm, bevorzugt 5 bis 350 µm, besonders bevorzugt 10 bis 200 µm.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers ist abhängig von der Nachbehandlung und kann irregulär oder sphärisch sein. Die Teilchengröße des Trägers kann z. B. durch kryogene Mahlung und/oder Siebung beliebig eingestellt werden.

Bei den Organometallverbindungen der Formel (III) handelt es sich vorzugsweise um neutrale Lewissäuren worin M⁴ für Lithium, Magnesium und/oder Aluminium, insbesondere Aluminium, steht. Beispiele für die bevorzugten Organometall-verbindungen der Formel (III) sind Trimethylaluminium, Triethylaluminium, Tri-isopropylaluminium, Trihexylaluminium, Trioctylaluminium, Tri-n-butylaluminium, Tri-isobutylaluminium, Tri-n-propylaluminium, Triisoprenaluminium, Dimethylaluminiummonochlorid, Diethyl-aluminiummonochlorid, Diisobutylaluminiummonochlorid, Methylaluminiumaesqui-chlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethyl-aluminium(triethylsiloxid), Phenylalan, Pentafluorphenylalan und o-Tolylalan.

Die im erfindungsgemäßen Katalysatorsystem enthaltenen Metallocenverbindungen können z.B. verbrückte oder unverbrückte Biscyclopentadienylkomplexe sein, wie sie beispielsweise in EP-A-0,129,368, EP-A-0,561,479, EP-A-0,545,304 und EP-A-0,576,970 beschrieben sind, Monocyclopentadienylkomplexe, wie verbrückte Amidocyclopentadienylkomplexe die beispielsweise in EP-A-0,416,815 beschrieben sind, mehrkernige Cyclopentadienylkomplexe wie beispielsweise in EP-A-0,632,063 beschrieben, p-Ligand substituierte Tetrahydropentalene wie beispielsweise in EP-A-0,659,758 beschrieben oder π-Ligand substituierte Tetrahydroindene wie beispielsweise in EP-A-0,661,300 beschrieben.

Außerdem können Organometallverbindungen eingesetzt werden, in denen der komplexierende Ligand kein Cyclopentadienyl-Liganden enthält, ausgewahlt aus Diamin-Komplexen der III. und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben werden, Diimin-Komplexen der VIII. Nebengruppe des Periodensystems der Elemente (z.B. Ni²⁺ oder Pd²⁺ Komplexe), wie sie *bei Brookhart et al, J. Am. Chem. Soc. 1995*, *117, 6414* und , Brookhart et al, J. Am. Chem. Soc., 1996, 118, 267 beschrieben werden und 2,6-bis(imino)pyridyl-Komplexe der VIII. Nebengruppe des Periodensystems der Elemente (z.B. Co²⁺ oder Fe²⁺ Komplexe), wie sie bei Brookhart et al, J. Am. Chem. Soc. 1998, 120, 4049 und Gibson et al, Chem. Commun. 1998, 849 beschrieben werden. Weiterhin können Metallocenverbindungen eingesetzt werden, deren komplexierender Ligand Heterocyclen enthält. Beispiele hierfür sind in WO 98/22486 beschrieben.

Bevorzugte Metallocenverbindungen sind unverbrückte oder verbrückte Verbindungen der Formel (X), 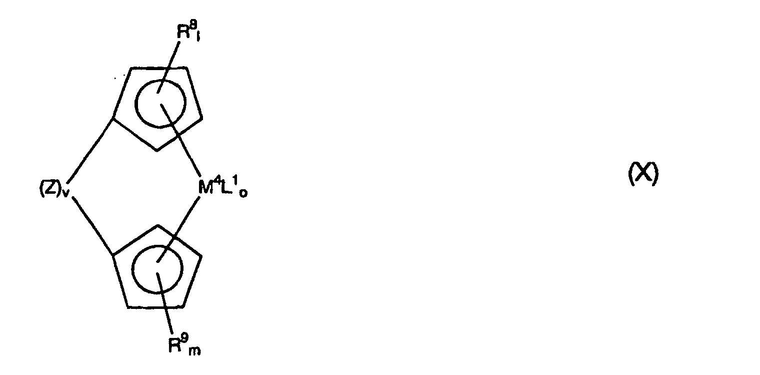 worin
- M⁴: ein Metall der III., IV., V. oder VI. Nebengruppe des Periodensystems der Elemente ist, insbesondere Ti, Zr oder Hf,
- R⁸: gleich oder verschieden sind und ein Wasserstoffatom oder SiR₃ sind, worin R gleich oder verschieden ein Wasserstoffatom oder eine C₁-C₄₀-kohlenstoffhaltige Gruppe wie C₁-C₂₀-Alkyl, C₁-C₁₀-Fluoralkyl. C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁸ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₄-C₂₄-Heteroaryl wie Pyridyl, Furyl oder Chinolyl, C₇-C₃₀-Arylalkyl, C₅-C₃₀-Heteroarylalkyl, C₇-C₃₀-Alkylaryl, C₅-C₃₀-Alkylheteroaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁸ können so miteinander verbunden sein, daß die Reste R⁸ und die sie verbindenden Atome des Cyclopentadienylringes ein kohlenstoffhaltiges oder ein kohlenstoff- und heteroatomhaltiges C₄-C₂₄-Ringsystem bilden, welches seinerseits substituiert sein kann,
- R⁹: gleich oder verschieden sind und ein Wasserstoffatom oder SiR₃ sind, worin R gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁹ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl. C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁹ können so miteinander verbunden sein, daß die Reste R⁹ und die sie verbindenden Atome des Cyclopentadienylringes ein kohlenstoffhaltiges oder ein kohlenstoff- und heteroatomhaltiges C₄-C₂₄-Ringsystem bilden, welches seinerseits substituiert sein kann,
- l: gleich 5 für v = 0, und 1 gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR¹², SR¹², OSiR¹²₃, SiR¹²₃, PR¹²₂ oder NR¹²₂ bedeuten, worin R¹² ein Halogenatom, eine C₁-C₁₀ Alkylgruppe, eine C₁-C₁₀ Alkoxygruppe eine halogenierte C₁-C₁₀ Alkylgruppe, eine C₆-C₂₀ Arylgruppe, C₇-C₂₀ Alkyl-arylgruppe C₇-C₂₀ Aryl-alkylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen MR¹⁰R¹¹, worin M Kohlenstoff, Silizium, Germanium oder Zinn ist und R¹⁰ und R¹¹ gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R⁸ und/oder R⁹ ein mono- oder polycyclisches Ringsystem bilden.

Bevorzugt sind chirale verbrückte Metallocenverbindungen der Formel (X), insbesondere solche in denen v gleich 1 ist und einer oder beide Cyclopentadienylringe so substituiert sind, daß sie einen Indenylring, einen Schwefel, Stickstoff oder Sauerstoff enthaltenden Indenyl-analogen Heterocyclus oder einen Schwefel, Stickstoff oder Sauerstoff enthaltenden Pentalen-analogen Heterocyclus darstellen.

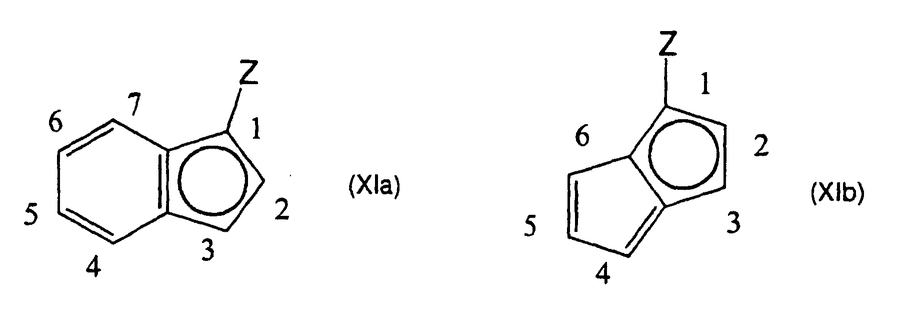

Die genannten Ringe sind bevorzugt substituiert, insbesondere [gemäß der Nomenklatur in den Formeln (XIa) und (XIb)] in 2-, 4-, 2,4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten der genannten Ringe zusammen ein Ringsystem bilden können.

Chirale verbrückte Metallocenverbindungen der Formel (X) können als reine racemische bzw pseudo-racemische oder reine meso bzw. pseudo-meso Verbindungen eingesetzt werden. Es können aber auch Gemische aus einer racemischen bzw pseudo-racemischen Verbindung und einer meso bzw. pseudo-meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4--acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbist(2-ethyl-4-phenyl-indenyl)zirkoniumdichlorid
Dimethylsilandiybis(2-methyl-4, 5-benzo-indenyl) zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl-4,5-(tetramethylbenzo)-indenyl)zirk-oniumdichlorid
Methyl(phenyl)silandiylbis(2-methyl-4-acenaphth-indenyl)zirkoniumdichlorid
Methyl(phenyl)silandiylbis(2-methyl-indenyl)zirkoniumdichlorid
Methyl(phenyl)silandiylbis(2-rnethyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkaniumdichlorid
1,2-Ethandiylbis(2-methyl-4,6 diisopropyl-indenyl)zirkoniumdichlorid
1,4-Bütandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵ -4,5-tetrahydropentalen)]-dichlorozirconium
[4-(η⁵-3'-Isopropyl-cyclopentadienyl)-4,6,6-trimethyl-(η⁵-4,5-tetrahydropentalen)]-dichlorozirconium
[4-(η⁵⁻Cyclopentadienyl)-4,7,7-trimethyl-(η⁵⁻4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3=-tert.Butyl-cyclopentadienyl)-4,7,7-trimethyl-(η⁵-4,5,6,7-tetrahydroindenyl)]-dichlorotitan
4-(η⁵-3=-Isopropylcyclopentadienyl)-4,7,7-trimethyl-(η⁵-4,5,6,7-tetrahydroindenyl)]-dichlorotitan
4-(η⁵-3=-Methylcyclopentadienyl)-4,7,7-trimethyl-(η⁵-4,5,6,7-tetrahydroindenyl)]-dichlorotitan
4-(η⁵-3=-Trimethylsilyl-cyclopentadienyl)-2-trimethylsilyl-4,7,7-trimethyl-(η⁵-4,5,6,7-tetrahydroindenyl)]-dichlorotitan
4-(η⁵-3=-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyldichlorotitan
(Tertbutylamido)-(tetramethyl-η⁵-cyclopentadienyl)-1,2-ethandiyldichlorotitan
(Methylamido)-(tetramethyl-η⁵-cyclopentadienyl)-dimethylsilyldichlorotitan
(methylamido)-(tetramethyl-η⁵-cyclopentadienyl)-1,2-ethandiyldichlorotitan
(Tertbutylamido)-(2.4-dimethyl-2,4-pentadien-1-yl)-dimethylsilyldichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis η⁵-1H-inden-1-yliden)methylsilyl)]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysi-lyl]-5-(η⁵-2,3,4,5-tetramethylcyclopenta-2,4-dien-1-yliden)-5-(η⁵-9H-fluoren-9-yliden)hexan]di-zirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(2-methyl-4-(4'-tert-butyl-phenyl-indenyl)zirkoniumdichlorid
Dimethylsilandiylbis(2-methyl-4-(4'-methyl-phenyl-indenyl)zirkoniumdichlorid
Dimethylsilandiylbis(2-methyl-4-(4'-ethyl-phenyl-indenyl)zirkoniumdichlorid
Dimethylsilandiylbis(2-methyl-4-(4'-trifluormethyl-phenyl-indenyl)zirkoniumdichlorid
Dimethylsilandiylbis(2-methyl-4-(4'-methoxy-phenyl-indenyl)zirkoniumdichlorid
Dimethylsilandiylbis(2-ethyl-4-(4'-tert-butyl-phenyl-indenyl)zirkoniumdichlorid
Dimethylsilandiylbis(2-ethyl-4-(4'-methyl-phenyl-indenyl)zirkoniumdichlorid
Dimethylsilandiylbis(2-ethyl-4-(4'-ethyl-phenyl-indenyl)zirkoniumdichlorid
Dimethylsilandiylbis(2-ethyl-4-(4'-trifluormethyl-phenyl-indenyl)zirkoniumdichlorid
Dimethylsilandiylbis(2-ethyl-4-(4'-methoxy-phenyl-indenyl)zirkoniumdichlorid
Dimethylsilandiylbis(2-methyl-4-(4'-tert-butyl-phenyl-indenyl)zirkoniumdimethyl
Dimethylsilandiylbis(2-methyl-4-(4'-methyl-phenyl-indenyl)zirkoniumdimethyl
Dimethylsilandiylbis(2-methyl-4-(4`-ethyl-phenyl-indenyl)zirkoniumdimethyl
Dimethylsilandiylbis(2-methyl-4-(4'-trifluormethyl-phenyl-indenyl)zirkoniumdimethyl
Dimethylsilandiylbis(2-methyl-4-(4'-methoxy-phenyl-indenyl)zirkoniumdimethyl
Dimethylsilandiylbis(2-ethyl-4-(4'-tert-butyl-phenyl-indenyl)zirkoniumdimethyl
Dimethylsilandiylbis(2-ethyl-4-(4'-methyl-phenyl-indenyl)zirkoniumdimethyl
Dimethylsilandiylbis(2-ethyl-4-(4'-ethyl-phenyl-indenyl)zirkoniumdimethyl
Dimethylsilandiylbis(2-ethyl-4-(4'-trifluormethyl-phenyl-indenyl)zirkoniumdimethyl
Dimethylsilandiylbis(2-ethyl-4-(4'-methoxy-phenyl-indenyl)zirkoniumdimethyl
Dimethylsilandiylbis(2-methyl-4-(4'-trimethylsilyl-phenyl-indenyl)zirkoniumdichlorid
Dimethylsilandiylbis(2-methyl-4-(4'-trimethylsilyl-phenyl-indenyl)zirkoniumdimethyl
Dimethylsilandiylbis(2-ethyl-4-(4'-trimethylsilyl-phenyl-indenyl)zirkoniumdichlorid
Dimethylsilandiylbis(2-ethyl-4-(4'-trimethylsilyl-phenyl-indenyl)zirkoniumdimethyl
Dimethylsilandiylbis(2-methyl-4-(4'-tert.-butyl-phenyl)-indenyl)hafnuimdichlorid
Dimethylsilandiylbis(2-methyl-4-(4' -tert.-butyl-phenyl)-indenyl)titandichlorid
Dimethylsilandiylbis(2-methyl-4-(4'-methyl-phenyl)-indenyl)zirkoniumdichlorid
Dimethylsilandiylbis(2-methyl-4-(4'-n-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-progyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4`-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4' -tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4--phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid

Beispiele sind des weiteren die Metallocene der obenstehenden Liste, die anstelle der Reste "dichlorid" die nachstehenden Reste aufweisen:
monochloro-mono-(2,4-di-tert.-butyl-phenolat)
monochloro-mono-(2,6-di-tert.-butyl-phenolat)
monochloro-mono-(3,5-di-tert.-butyl-phenolat)
monochloro-mono-(2,6-di-sec.-butyl-phenolat)
monochloro-mono-(2,4-di-methylphenolat)
monochloro-mono-(2,3-di-methylphenolat)
monochloro-mono-(2,5-di-methylphenolat)
monochloro-mono-(2,6-di-methylphenolat)
monochloro-mono-(3,4-di-methylphenolat)
monochloro-mono- (3,5-di-methylphenolat)
monochloro-monophenolat
monochloro-mono-(2-methylphenolat)
monochloro-mono-(3-methylphenolat)
monochloro-mono-(4-methylphenolat)
monochloro-mono-(2-ethylphenolat)
monochloro-mono-(3-ethylphenolat)
monochloro-mono-(4-ethylphenolat)
monochloro-mono-(2-sec.-butylphenolat)
monochloro-mono-(2-tert.-butylphenolat)
monochloro-mono-(3-tert.-butylphenolat)
monochloro-mono-(4-sec.-butylphenalat)
monochloro-mono-(4-tert.-butylphenolat)
monochloro-mono-(2-isopropyl-5-methylphenolat)
monochloro-mono-(4-isopropyl-3-methylphenolat)
monochloro-mono-(5-isopropyl-2-methylpheaolat)
monochloro-mono-(5-isopropyl-3-methylphenolat)
monochloro-mono-(2,4-bis-(2-methyl-2-butyl)-phenolat)
monochloro-mono-(2,6-di-tert.-butyl-4-methyl-phenolat)
monochloro-mono-(4-nonylphenolat)
monochloro-mono-(1-naphtholat)
monochloro-mono-(2-naphtholat)
monochloro-mono-(2-phenylphenolat)
monochloro-mono-(tert. butoxid)
monochloro-mono-(N-methylanilid)
monochloro-mono-(2-tert.-butylanilid)
monochloro-mono-(tert.-butylamid)
monochloro-mono-(di-iso.-propylamid)
monochloro-mono-methyl
monochloro-mono-benzyl
monochloro-mono-neopentyl
hat.

Das erfindungsgemäße Katalysatorsystem ist erhältlich durch Umsetzung mindestens einer Lewis-Base der Formel (I) und mindestens einer Elementorganischen Verbindung d), erhältlich durch Umsetzung mindestens einer Verbindung der Formel (VI) mit mindestens einer Verbindung der Formel (IX), mit einem Träger. Anschließend erfolgt die Umsetzung mit einer Lösung oder Suspension aus einem oder mehreren Metallocenverbindungen der Formel (X) und optional einer oder mehrerer Organometallverbindungen der Formel (III). Diese Aktivierung des Katalysatorsystems kann wahlweise vor dem Einschleusen in den Reaktor vorgenommen werden oder aber erst im Reaktor durchgeführt werden.

Zur Herstellung des erfindungsgemäßen Katalysatorsystems wird das Trägermaterial in einem organischen Lösemittel suspendiert. Geeignete Lösemittel sind aromatische oder aliphatische Lösemittel, wie beispielsweise Hexan, Heptan, Toluol oder Xylol oder halogenierte Kohlenwasserstoffe, wie Methylenchlorid oder halogenierte aromatische Kohlenwasserstoffe wie o-Dichlorbenzol. Der Träger kann zuvor mit einer Verbindung der Formel (III) vorbehandelt werden. Anschließend wird eine oder mehrere Verbindungen der Formel (I) zu dieser Suspension gegeben, wobei die Reaktionszeit zwischen 1 Minute und 48 Stunden liegen kann, bevorzugt ist eine Reaktionszeit zwischen 10 Minuten und 2 stunden. Das Reaktionsprodukt kann isoliert und anschließend resuspendiert werden oder aber auch direkt mit mindestens einer der cokatalytisch wirkenden Organoboraluminimverbindungen d) umgesetzt werden. Die Reaktionszeit liegt dabei zwischen 1 Minute und 48 Stunden, wobei eine Reaktionszeit von zwischen 10 Minuten und 2 Stunden bevorzugt ist. Bevorzugt werden von 0,1 bis 4 Äquivalente einer Lewis-Base der Formel (I) pro Äquivalent der organoboraluminimverbindung d) eingesetzt. Besonders bevorzugt werden von 0,5 bis 1 Äquivalente einer Lewis-Base der Formel (I) pro Äquivalent Organoboraluminimverbindung d) eingesetzt@@@@. Das Reaktionsprodukt dieser Umsetzung ist eine metalloceniumbildende Verbindung, die kovalent an das Trägermaterial fixiert ist. Es wird nachfolgend als modifiziertes Trägermaterial bezeichnet. Die Reaktionslösung wird anschließend filtriert und mit einem der oben genannten Lösemittel gewaschen. Danach wird das modifizierte Trägermaterial im Hochvakuum getrocknet. Das modifizierte Trägermaterial kann nach dem Trocknen wieder resuspendiert werden und mit einer Verbindung der Formel (III) nachbehandelt werden. Die Verbindung der Formel (III) kann aber auch vor der Filtration und Trocknung des modifizierten Trägermaterials zugegeben werden.

Das Aufbringen einer oder mehrerer Metallocenverbindungen vorzugsweise der Formel (X) und einer oder mehrerer Organometallverbindungen der Formel (III) auf das modifizierte Trägermaterial geht vorzugsweise so vonstatten, daß eine oder mehrere Metallocenverbindungen der Formel (X) in einem oben beschriebenen Lösemittel gelöst bzw. suspendiert wird und anschließend eine oder mehrere Verbindungen der Formel (III), die vorzugsweise ebenfalls gelöst bzw. suspendiert ist, umgesetzt werden. Das stöchiometrische Verhältnis an Metallocenverbindung der Formel (X) und einer Organometallverbindung der (III) beträgt 100 : 1 bis 10⁻⁴ : 1. Vorzugsweise beträgt das Verhältnis 1 : 1 bis 10⁻² : 1. Das modifizierte Trägermaterial kann entweder direkt im Polymerisationsreaktor oder in einem Reaktionskolben in einem oben genannten Lösemittel vorgelegt werden. Anschließend erfolgt die Zugabe der Mischung aus einer Metallocenverbindung der Formel (X) und einer organometallverbindung der Formel (III). Optional kann aber auch eine oder mehrere Metallocenverbindungen der Formel (X) ohne vorherige Zugabe einer Organometallverbindung der Formel (III) zu dem modifizierten Trägermaterial gegeben werden.

Die Menge an modifizierten Träger zu einer Metallocenverbindung der Formel (X) beträgt vorzugsweise 10g : 1 µmol bis 10⁻²g : 1 µmol. Das stöchiometrische Verhältnis an Metallocenverbindung der Formel (X) zu Einheiten der Organoboraluminimverbindung d), aus denen die geträgerte cokatalytisch wirkende Elementorganische Verbindung aufgebaut ist, beträgt 100 : 1 bis 10⁻⁴ : 1, vorzugsweise 1 : 1 bis 10⁻² : 1.

Alle beschriebenen Reaktionen zur Herstellung des erfindungsgemäßen Katalysatorsystems werden bevorzugt im Temperaturbereich von -40 bis 110°C, besonders bevorzugt von -10°C bis 70°C durchgeführt.

Das geträgerte Katalysatorsystem kann direkt zur Polymerisation eingesetzt werden. Es kann aber auch nach Entfernen des Lösemittels resuspendiert zur Polymerisation eingesetzt werden. Der Vorteil dieser Aktivierungsmethode liegt darin, daß es die Option bietet das polymerisationaaktive Katalysatorsystem erst im Reaktor entstehen zu lassen. Dadurch wird verhindert, daß beim Einschleusen des luftempfindlichen Katalysators zum Teil Zersetzung eintritt.

Weiterhin betrifft die Erfindung ein Verfahren zur Herstellung eines Olefinpolymers in Gegenwart des erfindungsgemäßen Katalysatorsystems. Die Polymerisation kann eine Homo- oder eine Copolymerisation sein. Bevorzugt werden Homo- oder Copolymere des Polypropylens hergestellt.

Bevorzugt werden Olefine der Formel R^{α}-CH=CH-R^{β} polymerisiert, worin R^{α} und R^{β} gleich oder verschieden sind und ein Wasseratoffatom, ein Balogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder carbonsäureestergruppe substituiert sein kann, oder R^{α} und R^{β} mit den sie verbindenden Atomen einen oder mehrere Ringe bilden. Beispiele für solche olefine sind 1-olefine wie Ethylen, Propylen, 1-Buten, 1-Hexen, 4-Methyl-1-penten, 1-Octen, Styrol, cyclische Olefine wie Norbornen, Vinylnorbozmen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-1-olefinen, insbesondere Propylen, und /oder einem oder mehreren C₄-C₂₀-Diene, insbesondere 1,3-Butadien, copolymerisiert oder Norbornen und Ethylen copolymerisiert.

Die Polymerisation wird bevorzugt bei einer Temperatur von - 60 bis 300 °C, besonders bevorzugt 30 bis 250 °C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium. durchgeführt werden.

Das geträgerte Katalysatorsystem kann entweder direkt im Polymerisationssystem gebildet werden oder es kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten und/oder zwei oder mehr verschiedene cokatalytisch wirksame Elementorganische Verbindungen.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des erfindungsgemäßen Katalysatorsystems bzw. vor Aktivierung des erfindungsgemäßen Katalysatorsystems im Polymerisationssystem kann zusätzlich eine Alkylalumiuniumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 200 bis 0,001 mmol Al pro kg Reaktorinhalt dem Polymerisationssystem zugesetzt. Bevorzugt werden Triisobutylaluminium und Triethylaluminium in einer Konzentration von 10 bis 0,01 mmol Al pro kg Reaktorinhalt eingesetzt, dadurch kann bei der Synthese eines geträgerten Katalysatorsystems das molare Al/M¹-Verhältnis klein gewählt werden.

Weiterhin kann bei dem erfindungsgemäßen Verfahren ein Additiv wie ein Antistatikum verwendet werden z.B. zur Verbesserung der Kornmorphologie des Olefinpolymers. Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschreiben werden. Weitere geeignete Antistatika sind z.B. Isopropanol, C₁₂- bis C₂₂- Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A-0,107,127 angegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA®-3 der Fa. Shell und Atmer 163 der Fa. ICI können ebenfalls verwendet werden.

Vorzugsweise wird das Antistatikum als Lösung eingesetzt, im bevorzugten Fall von Isopropanol, Stadis® 450 und Atmer 163 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel (X) eingesetzt. Die benötigten Mengen an Antistatikum können jedoch, je nach Art des eingesetzten Antistatikums, in weiten Bereichen schwanken.

Die eigentliche Polymerisation wird vorzugsweise in flüssigen Monomer (bulk) oder in der Gasphase durchgeführt.

Das Antistatikum kann zu jedem beliebigen Zeitpunkt zur Polymerisation zudosiert werden. Zum Beispiel ist eine bevorzugte Verfahrensweise die, daß das geträgerte Katalysatorsystem in einem organischen Lösemittel, bevorzugt Alkane wie Heptan oder Isododekan, resuspendiert wird. Anschließend wird es unter Rühren in den Polymerisationsautoklav zugegeben. Danach wird das Antistatikum zudosiert. Die Polymerisation wird bei Temperaturen im Bereich von 0 bis 100°C durchgeführt. Eine weitere bevorzugte Verfahrensweise ist, daß das Antistatikum vor Zugabe des geträgerten katalysatorsystems in den Polymerisationsautoklav zudosiert wird. Anschließend wird das resuspendierte geträgerte Katalysatorsystem unter Rühren bei Temperaturen im Bereich von 0 bis 100°C zudosiert. Die Polymerisationszeit kann im Bereich von 0,1 bis 24 Stunden. Bevorzugt ist eine Polymerisationszeit im Bereich von 0,1 bis 5 Stunden.

Bei dem vorstehend beschriebenen Verfahren treten keine Reaktorbeläge auf, es bilden sich keine Agglomerate und die Produktivität des eingesetzten Katalysatorsystems ist hoch. Die mit dem erfindungsgemäßen Verfahren hergestellten Polymere zeichnen sich durch eine enge Molekulargewichtsverteilung und gute Kornmorphologie aus.

Die nachfolgenden Beispiele dienen zur näheren Erläuterung der Erfindung

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert.

### Beispiel 1: Synthese von Bis(dimethylalumoxy)pentafluorphenylboran

10ml Trimethylaluminium (2M in Toluol, 20mmol) werden in 40ml Toluol vorgelegt. Bei -10°C werden zu dieser Lösung 2,1g Pentafluorboronsäure (10mmol) in 50ml Toluol über 15 Minuten zugetropft. Es wird 1 Stunde bei -10°C gerührt und anschließend eine weitere Stunde bei Raumtemperatur (RT). Die leicht trübe, hellgelbe Lösung wird über eine G4-Fritte filtriert. Es resultiert eine klare, hellgelbe Lösung (0.1M bezogen auf Bor) von Bis(dimethylalumoxy)pentafluorphenylboran in Toluol.

### Beispiel 2: Synthese von Di[bis(pentafluorphenyl)boroxy]methylalan

5ml Trimethylaluminium (2M in Toluol, 10 mmol) werden in 45ml Toluol vorgelegt. Bei -10°C werden zu dieser Lösung 6.92g Bis(pentafluorphenyl)borinsäure (20mmol) in 50 ml Toluol über 15 Minuten zugetropft. Es wird 0,5 Stunden bei -10°C gerührt und anschließend eine weitere Stunde bei Raumtemperatur. Die leicht trübe, hellgelbe Lösung wird über eine G4-Fritte filtriert. Es resultiert eine klare, hellgelbe Lösung (0.1M bezogen auf Al) von Di[bis(pentafluorphenyl)boroxy]methylalan in Toluol.

### Beispiel 2A: Synthese von Di[bis(pentafluorphenyl)boroxy]methylalan

5ml Trimethylaluminium (2M in Toluol, 10 mmol) werden in 45ml Toluol vorgelegt. Bei 25°C werden zu dieser Lösung 6.92g Bis(pentafluorphenyl)borinsäure (20mmol) in 50 ml Toluol über 15 Minuten zugetropft. Es wird 1 Stunde bei 25°C gerührt. Die leicht trübe, hellgelbe Lösung wird über eine G4-Fritte filtriert. Es resultiert eine klare, hellgelbe Lösung (0.1M bezogen auf Al) von Di[bistpentafluorphenyl)boroxy]methylalan in Toluol.

### Beispiel 3: Umsetzung von Tris(pentafluorphenyl)boran und Bis (pentafluorphenyl) borinsäure mit Trimethylaluminium

5ml Trimethylaluminium (2M in Toluol, 10 mmol) werden in 40ml Toluol vorgelegt. Bei -10°C wird zu dieser Lösung eine Mischung aus 6.92 g Bis(pentafluorphenyl)borinsäure (20mmol) und 5,12 g Tris(pentafluorphenyl)boran (10 mmol) in 50 ml Toluol über 15 Minuten zugetropft. Es wird 0,5 h Stunden bei -10°C gerührt und anschließend eine weitere Stunde bei Raumtemperatur. Die leicht trübe, hellgelbe Lösung wird über eine G4-Fritte filtriert. Es resultiert eine klare, hellgelbe toluolische Lösung.

### Beispiel 4: Trägerung von Bis(dimethylalumoxy)pentafluorphenylboran

2g SiO₂ (PQ MS3030, vorbehandelt bei 140°C, 10 mbar, 10 Std.) werden in 30 ml Toluol suspendiert und bei Raumtemperatur 0,6 ml N,N-Dimethylbenzylamin zugegeben. Es wird auf 0°C gekühlt und über einen Tropftrichter 50ml der im Beispiel 1 hergestellten Lösung zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 3,03g eines weissen Trägermaterials.

### Beispiel 5: Trägerung von Di[bis(pentafluorphenyl)boroxy]methylalan

2g SiO₂ (PQ MS3030, vorbehandelt bei 140°C, 10 mbar, 10 Std.) werden in 30 ml Toluol suspendiert und bei Raumtemperatur 0,48 ml N,N-Dimethylbenzylamin zugegeben. Es wird auf 0°C gekühlt und über einen Tropftrichter 40ml der im Beispiel 2 hergestellten Lösung zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 4,01g eines weissen Trägermaterials.

### Beispiel 6: Trägerung der Reaktionsmischung aus Beispiel 3

2g SiO₂ (PQ MS3030, vorbehandelt bei 140°C, 10 mbar, 10 Std.) werden in 30 ml Toluol suspendiert und bei Raumtemperatur 0,48 ml N,N-Dimethylbenzylamin zugegeben. Es wird auf 0°C gekühlt und über einen Tropftrichter 40ml der im Beispiel 3 hergestellten Lösung zugetropft. Man läßt auf Raumtemperatur erwärmen und rührt 3 Stunden nach. Die Suspension wird anschließend filtriert und mit Pentan gewaschen. Danach wird der Rückstand im Ölpumpenvakuum bis zur Gewichtskonstanz getrocknet. Es resultieren 4,5g eines weissen Trägermaterials.

### Beispiel 7: Herstellung des Katalysatorsystems 1

Zu 5,8 mg Dimethylsilandiylbis(2-methyl-4-phenyl-indenyl)-zirkoniumdimethyl (10 µmol) in 3 ml Toluol werden bei Raumtemperatur 0,5g des im Beispiel 4 hergestellten Trägers gegeben. Die Suspension wird kurz gerührt und anschließend werden 0,01 ml Trimethylaluminium (TMA) (2M in Toluol, 20 µmol) zugegeben. Die Katalysatorlösung wird 1 Stunde gerührt und danach das Lösemittel im Ölpumpenvakuum abgezogen. Es resultiert ein orange farbendes, freifließendes Pulver.

### Beispiel 8: Herstellung des Katalysatorsystems 2

Zu 7 mg Dimethylsilandiylbis(2-methyl-4-(4'-tert-butyl-phenyl-indenyl)zirkonium-dichlorid (10 µmol) in 5 ml Toluol werden 40 Minuten mit 0,02 ml TMA (2M in Toluol, 40 µmol) gerührt. Anschließend werden bei Raumtemperatur 0,44 g des im Beispiel 5 hergestellten Trägers gegeben. Die Katalysatorlösung wird 1 Stunde gerührt und danach das Lösemittel im Ölpumpenvakuum abgezogen. Es resultiert ein orange farbendes, freifließendes Pulver.

### Beispiel 9: Herstellung des Katalysatorsystems 3

Zu 3,3 mg Dimethylsilandiylbis(2-methyl-4-(4'-tert-butyl-phenylindenyl)zirkonium- dimethyl (5 µmol) in 3 ml Toluol werden bei Raumtemperatur 0,2 g des im Beispiel 6 hergestellten Trägers gegeben. Die Katalysatorlösung wird 1 Stunde gerührt und danach das Lösemittel im Ölpumpenvakuum abgezogen. Es resultiert ein orange farbendes, freifließendes Pulver.

### Beispiel 10: Polymerisation mit dem Katalysatorsystem 1

Ein trockener 21-Reaktor wird zunächst mit Stickstoff und anschließend mit Propylen gespült und mit 1,5 l flüssigem Propylen befüllt. Dazu werden 3ml Triisobutylaluminium (TIBA) (20% ig in Varsol) zugegeben und 15 Minuten gerührt. Anschließend wird das im Beispiel 7 hergestellte Katalysatorsystem 1 in 20ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 160 g Polypropylen-Pulver (PP). Der Reaktor zeigte keine Beläge an der Innenwand oder Rührer. Die Katalysatoraktivität beträgt 28 kg PP/g Metallocen x h.

### Beispiel 11: Polymerisation mit dem Katalysatorsystem 2

Ein trockener 21-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 8 hergestellte Katalysatorsystem 3 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 255 g Polypropylen-Pulver. Der Reaktor zeigte keine Beläge an der Innenwand oder Rührer. Die Katalysatoraktivität beträgt 36 kg PP/g Metallocen x h.

### Beispiel 12: Polymerisation mit dem Katalysatorsystem 3

Ein trockener 21-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird das im Beispiel 9 hergestellte Katalysatorsystem 3 in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 145 g Polypropylen-Pulver. Der Reaktor zeigte keine Beläge an der Innenwand oder Rührer. Die Katalysatoraktivität beträgt 44 kg PP/g Metallocen x h.

## Patentansprüche

1. Katalysatorsystem, enthaltend
a) mindestens eine Organometallverbindung, ausgewählt aus Metallocenen, Diamin-Komplexen der III. und IV. Nebengruppe des Periodensystems der Elemente, Diimin-Komplexen der VIII. Nebengruppe des Periodensystems der Elemente und 2,6-bis(imino)pyridyl-Komplexen der VIII. Nebengruppe des Periodensystems der Elemente,
b) mindestens eine Lewis-Base,
c) mindestens einen Träger und
d) mindestens eine Elementorganische Verbindung, die das Umsetzungsprodukt der Umsetzung mindestens einer Verbindung der Formel (VI) mit mindestens einer Verbindung der Formel (IX),
R_{f}⁴B(̵XR⁷)_{g} (VI) 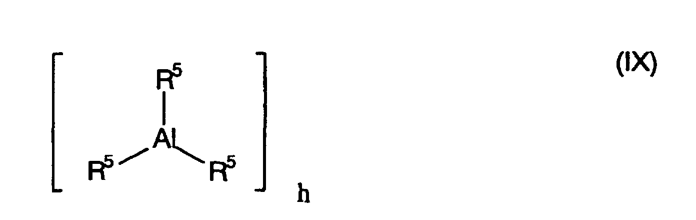
worin
R⁷ ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann,
R⁴ und R⁵ gleich oder verschieden sind und ein Wasserstoffatom, ein Halogenatom oder eine C₁-C₄₀-kohlenstoffhaltige Gruppe sind oder R⁴ -OSiR₃-Gruppe ist, worin R gleich oder verschieden sind und die gleiche Bedeutung wie R⁵ haben,
X ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
f eine ganze Zahl von 0 bis 3 ist
g eine ganze Zahl von 0 bis 3 ist, wobei f + g ungleich 0 sind,
h eine ganze Zahl von 1 bis 10 ist,
ist,
wobei die Elementorganische Verbindung kovalent an den Träger gebunden ist,
**dadurch gekennzeichnet, daß** die Lewis-Base die Formel I,
M¹R¹R²R³ (I)
worin
M¹ für ein Element der V. Hauptgruppe des Periodensystems der Elemente steht,
R¹, R² und R³ gleich oder verschieden sind und für ein Wasserstoffatom, eine C₁-C₂₀-Alkyl-, eine C₁-C₂₀-Halogenalkyl- oder C₇-C₄₀-Arylalkyl-Gruppe stehen, wobei gegebenenfalls zwei Reste oder alle drei Reste R¹, R² und R³ über C₂-C₂₀-Kohlenstoffeinheiten miteinander verbunden sein können, wobei mindestens ein Rest R¹, R² oder R³ für eine C₇-C₄₀-Arylalkyl-Gruppe steht,
aufweist.

2. Katalysatorsystem gemäß Anspruch 1, **dadurch gekennzeichnet, daß** in der Lewis-Base der Formel I als C₇-C₄₀-Arylalkyl-Gruppe Benzyl zum Einsatz kommt.

3. Katalysatorsystem gemäß Anspruch 1 oder 2, **dadurch gekennzeichnet, daß** das Metallocen ein Metallocen der Formel (X) ist, 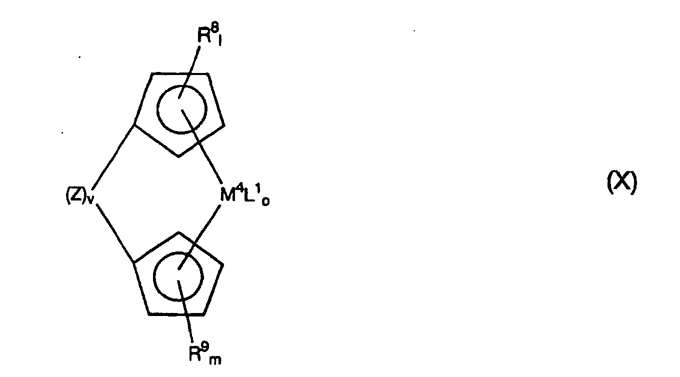 worin
M⁴ ein Metall der III., IV., V. oder VI. Nebengruppe des Periodensystems der Elemente ist,
R⁸ gleich oder verschieden sind und ein Wasserstoffatom oder SiR₃ sind, worin R gleich oder verschieden ein Wasserstoffatom oder eine C₁-C₄₀-kohlenstoffhaltige Gruppe sind, oder R⁸ sind eine C₁-C₃₀-kohlenstoffhaltige Gruppe oder zwei oder mehrere Reste R⁸ können so miteinander verbunden sein, daß die Reste R⁸ und die sie verbindenden Atome des Cyclopentadienylringes ein kohlenstoffhaltiges oder ein kohlenstoff- und heteroatomhaltiges C₄-C₂₄-Ringsystem bilden, welches seinerseits substituiert sein kann,
R⁹ gleich oder verschieden sind und ein Wasserstoffatom oder SiR₃ sind, worin R gleich oder verschieden ein Wasserstoffatom oder eine C₁-C₄₀-kohlenstoffhaltige Gruppe sind, oder R⁹ sind eine C₁-C₃₀-kohlenstoffhaltige Gruppe oder zwei oder mehrere Reste R⁹ können so miteinander verbunden sein, daß die Reste R⁹ und die sie verbindenden Atome des Cyclopentadienylringes ein kohlenstoffhaltiges oder ein kohlenstoff- und heteroatomhaltiges C₄-C₂₄-Ringsystem bilden, welches seinerseits substituiert sein kann,
l gleich 5 für v = 0, und 1 gleich 4 für v = 1 ist,
m gleich 5 für v = 0, und m gleich 4 für v = 1 ist,
L¹ gleich oder verschieden sein können und ein Wasserstoffatom, eine C₁-C₁₀-Kohlenwasserstoffgruppe, ein Halogenatom, oder OR¹², SR¹², OSiR¹²₃, SiR¹²₃, PR¹²₂ oder NR¹²₂ bedeuten, worin R¹² ein Halogenatom, eine C₁-C₁₀ Alkylgruppe, eine C₁-C₁₀ Alkoxygruppe, eine halogenierte C₁-C₁₀ Alkylgruppe, eine C₆-C₂₀ Arylgruppe, C₇-C₂₀ Alkyl-arylgruppe, C₇-C₂₀ Aryl-alkylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
o eine ganze Zahl von 1 bis 4 ist,
z ein verbrückendes Strukturelement zwischen den beiden Cyclo-pentadienylringen bezeichnet und
v 0 oder 1 ist.

4. Katalysatorsystem gemäß einem der Ansprüche 1 bis 3, **dadurch gekennzeichnet, daß** es als Bestandteil e) mindestens eine Organometallverbindung der Formel III,
[M³R⁶ _{d}]ₑ (III)
worin
M³ ein Element der I., II. und III. Hauptgruppe des Periodensystems der Elemente ist,
R⁶ gleich oder verschieden ist und ein Wasserstoffatom, ein Halogenatom oder eine C₁-C₄₀-kohlenstoffhaltige Gruppe bedeutet,
d eine ganze Zahl von 1 bis 3 und
e ist eine ganze Zahl von 1 bis 4 ist,
enthält.

5. Katalysatorsystem gemäß einem der Ansprüche 1 bis 4, **dadurch gekennzeichnet, daß** als Träger ein poröser anorganischer oder organische Feststoff eingesetzt wird.

6. Verwendung eines Katalysatorsystems gemäß einem der Ansprüche 1 bis 5 zur Herstellung von Polyolefinen.

7. Verfahren zur Herstellung von Polyolefinen, **dadurch gekennzeichnet, daß** die Polymerisation in Gegenwart mindestens eines Katalysatorsystems gemäß einem der Ansprüche 1 bis 5 erfolgt.

## Claims

1. A catalyst system comprising
a) at least one organometallic compound selected from metallocenes, diamine complexes of metals of transition groups III and IV of the Periodic Table of the Elements, diimine complexes of metals of transition group VIII of the Periodic Table of the Elements and 2,6-bis(imino)pyridyl complexes of metals of transition group VIII of the Periodic Table of the Elements,
b) at least one Lewis base,
c) at least one support and
d) at least one organoelement compound which is the reaction product of at least one compound of the formula (VI) with at least one compound of the formula (IX),
R_{f}⁴B(̵XR⁷) _{g} (VI) 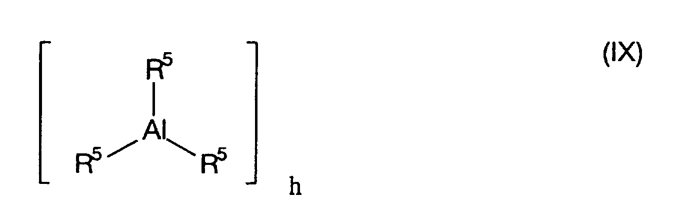
where
R⁷ can be a hydrogen atom or a boron-free C₁-C₄₀ group such as C₁-C₂₀-alkyl, C₆-C₂₀-aryl, C₇-C₄₀-arylalkyl, C₇-C₄₀-alkylaryl,
R⁴ and R⁵ are identical or different and are each a hydrogen atom, a halogen atom or a C₁-C₄₀ group or R⁴ is an -OSiR₃ group, where R are identical or different and are as defined for R⁵,
X is an element of main group VI of the Periodic Table of the Elements or an NR group, where R is a hydrogen atom or a C₁-C₂₀-hydrocarbon radical such as C₁-C₂₀-alkyl or C₁-C₂₀-aryl,
f is an integer from 0 to 3
g is an integer from 0 to 3, where f + g is not equal to 0,
h is an integer from 1 to 10,
where the organoelement compound is covalently bound to the support,
wherein the Lewis base has the formula I,
M¹R¹R²R³ (I)
where
M¹ is an element of main group V of the Periodic Table of the Elements,
R¹, R² and R³ are identical or different and are each a hydrogen atom, a C₁-C₂₀-alkyl group, a C₁-C₂₀-haloalkyl group or a C₇-C₄₀-arylalkyl group, where two radicals or all three radicals R¹, R² and R³ may be joined to one another via C₂-C₂₀ units, where at least one radical R¹, R² or R³ is a C₇-C₄₀-arylalkyl group.

2. A catalyst system as claimed in claim 1, wherein benzyl is used as a C₇-C₄₀-arylalkyl group in the Lewis base of the formula I.

3. A catalyst system as claimed in claim 1 or 2, wherein the metallocene is a metallocene of the formula (X), 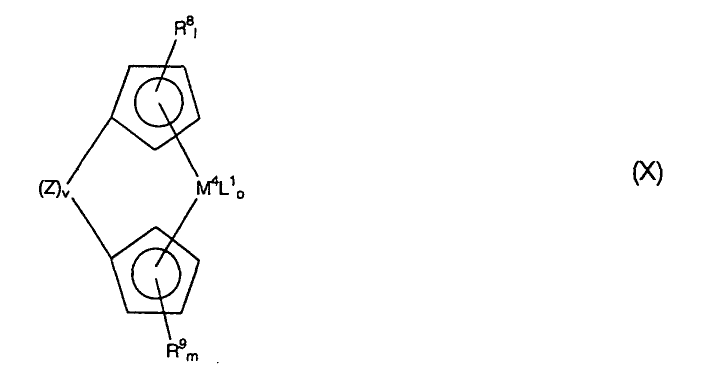 where
M⁴ is a metal of transition group III, IV, V or VI of the Periodic Table of the Elements,
R⁸ are identical or different and are each a hydrogen atom or SiR₃, where R are identical or different and are each a hydrogen atom or a C₁-C₄₀ group, or R⁸ are a C₁-C₃₀ group, or two or more radicals R⁸ may be joined to one another in such a way that the radicals R⁸ and the atoms of the cyclopentadienyl ring which connect them form a carbocyclic or heterocyclic C₄-C₂₄ ring system which may in turn be substituted,
R⁹ are identical or different and are each a hydrogen atom or SiR₃, where R are identical or different and are each a hydrogen atom or a C₁-C₄₀ group, or R⁹ are a C₁-C₃₀ group, or two or more radicals R⁹ may be joined to one another in such a way that the radicals R⁹ and the atoms of the cyclopentadienyl ring which connect them form a carbocyclic or heterocyclic C₄-C₂₄ ring system which may in turn be substituted,
l is 5 when v = 0 and 1 is 4 when v = 1,
m is 5 when v = 0 and m is 4 when v = 1,
L¹ may be identical or different and are each a hydrogen atom, a C₁-C₁₀-hydrocarbon group, a halogen atom or OR¹², SR¹², OSiR¹²₃, SiR¹²₃, PR¹²₂ or NR¹²_{2,} where, R¹² is a halogen atom, a C₁-C₁₀-alkyl group, a C₁-C₁₀-alkoxy group, a halogenated C₁-C₁₀-alkyl group, a C₆-C₂₀-aryl group, a C₇-C₂₀-alkylaryl group, a C₇-C₂₀-arylalkyl group or a halogenated C₆-C₂₀-aryl group, or L¹ are a toluenesulfonyl, trifluoroacetyl, trifluoroacetoxyl, trifluoromethanesulfonyl, nonafluorobutanesulfonyl or 2,2,2-trifluoroethanesulfonyl group,
o is an integer from 1 to 4,
Z is a bridging structural element between the two cyclopentadienyl rings and
v is 0 or 1.

4. A catalyst system as claimed in any of claims 1 to 3 which further comprises at least one organometallic compound of the formula III
[M³R⁶ _{d}]ₑ (III)
where
M³ is an element of main group I, II or III of the Periodic Table of the Elements,
R⁶ are identical or different and are each a hydrogen atom, a halogen atom or a C₁-C₄₀ group,
d is an integer from 1 to 3 and
e is an integer from 1 to 4,
as constituent e).

5. A catalyst system as claimed in any of claims 1 to 4, wherein a porous inorganic or organic solid is used as support.

6. The use of a catalyst system as claimed in any of claims 1 to 5 for preparing polyolefins.

7. A process for preparing polyolefins, in which the polymerization is carried out in the presence of at least one catalyst system as claimed in any of claims 1 to 5.

## Revendications

1. Système catalyseur contenant
a) au moins un composé organométallique choisi parmi les métallocènes, les complexes diamines du IIIème et du IVème groupes secondaires du Tableau Périodique des Eléments, les complexes diimines du VIIIème groupe secondaire du Tableau Périodique des Eléments, les complexes 2,6-bis(imino)pyridyliques du VIIIème groupe secondaire du Tableau Périodique des Eléments,
b) au moins une base de Lewis,
c) au moins un support, et
d) au moins un composé organique, qui est le produit de la réaction d'au moins un composé de formule (VI) avec au moins un composé de formule (IX)
R_{f}⁴B(̵XR⁷)_{g} (VI) 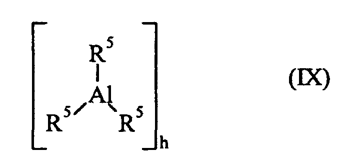
dans lesquelles
R⁷ peut être un atome d'hydrogène ou un groupe carboné en C₁-C₄₀ exempt de bore, tel qu'un groupe alkyle en C₁-C₂₀, aryle en C₆-C₂₀, arylalkyle en C₇-C₄₀, alkylaryle en C₇-C₄₀,
R⁴ et R⁵ sont identiques ou différents et représentent chacun un atome d'hydrogène, un atome d'halogène ou un groupe carboné en C₁-C₄₀, ou encore R⁴ est un groupe -OSiR₃ dans lequel les radicaux R sont identiques ou différents et ont les mêmes significations que R⁵,
X est un élément du VIème groupe principal du Tableau Périodique des Eléments ou un groupe NR dans lequel R est un atome d'hydrogène ou un résidu hydrocarboné en C₁-C₂₀ tel qu'un groupe alkyle en C₁-C₂₀ ou aryle en C₁-C₂₀,
f est un nombre entier de 0 à 3,
g est un nombre entier de 0 à 3, la somme f + g étant différente de 0,
h est un nombre entier de 1 à 10,
le composé organique étant lié d'une manière covalente au support,
**caractérisé en ce que** la base de Lewis a la formule I
M¹R¹R²R³ (I)
dans laquelle
M¹ est un élément du Vème groupe principal du Tableau Périodique des Eléments,
R¹, R² et R³ sont identiques ou différents et représentent chacun un atome d'hydrogène, un groupe alkyle en C₁-C₂₀, un groupe halogènalkyle en C₁-C₂₀ ou un groupe arylalkyle en C₇-C₄₀, éventuellement deux radicaux R¹, R² et R³, ou les trois, pouvant être liés les uns aux autres par l'intermédiaire de motifs carbonés en C₂-C₂₀, au moins l'un des radicaux R¹, R² ou R³ étant un groupe arylalkyle en C₇-C₄₀.

2. Système catalyseur selon la revendication 1, **caractérisé en ce que**, dans la base de Lewis de formule I, on utilise le groupe benzyle en tant que groupe arylalkyle en C₇-C₄₀.

3. Système catalyseur selon la revendication 1 ou 2, **caractérisé en ce que** le métallocène est un métallocène de formule (X) 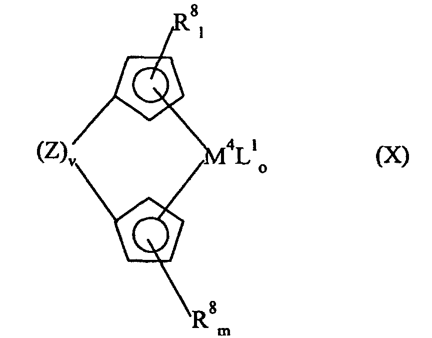 dans laquelle
M⁴ est un métal du IIIème, du IVème, du Vème ou du VIème groupe secondaire du Tableau Périodique des Eléments,
les radicaux R⁸ sont identiques ou différents et représentent chacun un atome d'hydrogène ou SiR₃, où les radicaux R, qui sont identiques ou différents, sont chacun un atome d'hydrogène ou un groupe carboné en C₁-C₄₀ ; ou encore chacun des radicaux R⁸ est un groupe carboné en C₁-C₃₀, ou encore au moins deux des radicaux R⁸ peuvent être liés les uns aux autres de façon que les radicaux R⁸ et les atomes qui les relient du noyau cyclopentadiényle forment un système cyclique en C₄-C₂₄, carboné, ou carboné et contenant un ou des hétéroatomes, ce système pouvant pour sa part être substitué,
les radicaux R⁹ sont identiques ou différents et représentent chacun un atome d'hydrogène ou SiR₃, où les radicaux R, qui sont identiques ou différents, sont chacun un atome d'hydrogène ou un groupe carboné en C₁-C₄₀ ; ou encore chacun des radicaux R⁹ est un groupe carboné en C₁-C₃₀, ou encore au moins deux des radicaux R⁹ peuvent être liés les uns aux autres de façon que les radicaux R⁹ et les atomes qui les relient du noyau cyclopentadiényle forment un système cyclique en C₄-C₂₄, carboné, ou carboné et contenant un ou des hétéroatomes, ce système pouvant pour sa part être substitué,
l vaut 5 quand v vaut 0, et 1 vaut 4 quand v vaut 1,
m vaut 5 quand v vaut 0, et m vaut 4 quand v vaut 1,
les radicaux L¹ peuvent être identiques ou différents et représentent chacun un atome d'hydrogène, un groupe hydrocarboné en C₁-C₁₀, un atome d'halogène, ou encore OR¹², SR¹², OSiR¹²₃, SiR¹²₃, PR¹²₂ ou NR¹²₂, R¹² étant un atome d'halogène, un groupe alkyle en C₁-C₁₀, un groupe alcoxy en C₁-C₁₀, un groupe alkyle en C₁-C₁₀ halogéné, un groupe aryle en C₆-C₂₀, un groupe alkylaryle en C₇-C₂₀, un groupe arylalkyle en C₇-C₂₀ ou un groupe aryle en C₆-C₂₀ halogéné, ou encore chacun des radicaux L¹ est un groupe toluènesulfonyle, trifluoracétyle, trifluoracétoxyle, trifluorométhanesulfonyle, nonafluorobutanesulfonyle ou 2,2,2-trifluoroéthanesulfonyle,
o est un nombre entier de 1 à 4,
Z est un élément structural pontant entre les deux noyaux cyclopentadiényle, et
v vaut 0 ou 1.

4. Système catalyseur selon l'une des revendications 1 à 3, **caractérisé en ce qu'**il contient en tant que constituant e) au moins un composé organométallique de formule III,
[M³R⁶ _{d}]ₑ (III)
dans laquelle
M³ est un élément du Ier, du IIème et du IIIème groupes principaux du Tableau Périodique des Eléments,
les radicaux R⁶ sont identiques ou différents et représentent chacun un atome d'hydrogène, un atome d'halogène ou un groupe carboné en C₁-C₄₀,
d est un nombre entier de 1 à 3, et
e est un nombre entier de 1 à 4.

5. Système catalyseur selon l'une des revendications 1 à 4, **caractérisé en ce qu'**on utilise en tant que support un solide poreux, inorganique ou organique.

6. Utilisation d'un système catalyseur selon l'une des revendications 1 à 5 pour préparer des polyoléfines.

7. Procédé de préparation de polyoléfines, **caractérisé en ce que** la polymérisation est mise en oeuvre en présence d'au moins un système catalyseur selon l'une des revendications 1 à 5.
